# EUROPÄISCHE PATENTSCHRIFT

(11) **EP 1 289 056 B1**
(45) Veröffentlichungstag und Bekanntmachung des Hinweises auf die Patenterteilung: **25.01.2006**
(21) Anmeldenummer: 01118546.9
(22) Anmeldetag: 01.08.2001
(51) Int. Cl.: H01Q 3/26, H04Q 7/36, H04B 7/08

(54) **Verfahren zur Strahlungsdiagrammformung in einem Funkkommunikationssystem**
Method for beamforming in a radio communication system
Méthode de formation de faisceaux dans un système de radiocommunication

(43) Veröffentlichungstag der Anmeldung: 05.03.2003
(73) Patentinhaber: SIEMENS AKTIENGESELLSCHAFT, 80333 München (DE)
(72) Erfinder: Frey, Thomas, 89081 Ulm (DE); Reinhardt, Markus, 89231 Neu-Ulm (DE); Schnabl, Gottfried, Dr., 89077 Ulm (DE); Seeger, Alexander, 85622 Feldkirchen (DE)

(56) Entgegenhaltungen:
- GB-A- 2 335 572
- CHRYSSOMALLIS M: "SMART ANTENNAS" IEEE ANTENNAS AND PROPAGATION MAGAZINE, IEEE INC, NEW YORK, US, Bd. 42, Nr. 3, Juni 2000 (2000-06), Seiten 129-136, XP000936720 ISSN: 1045-9243
- BRUNNER ET AL.: "SPACE-TIME EIGENRAKE AND DOWNLINK EIGENBEAMFORMER: EXPLOITING LONG-TERM AND SHORT-TERM CHANNEL PROPERTIES IN WCDMA" GLOBECOM 00 IEEE GLOBAL TELECOMMUNICATIONS CONFERENCE, Bd. 1, 17. November 2000 (2000-11-17) - 1. Dezember 2000 (2000-12-01), Seiten 138-142, XP002185838 SAN FRANCISCO, USA

## Beschreibung

Die Erfindung betrifft ein Verfahren zur Strahlungsdiagrammformung in einer Verbindung zwischen einem Teilnehmer und einer Basisstation mit adaptiver Antennenanordnung in einem Funkkommunikationssystem mit Vielfachzugriffsverfahren.

Bei Funkkommunikationssystemen, insbesondere Mobilfunksystemen, sind verschiedene Konzepte zur Empfangsverbesserung bei Verbindungen zwischen einem Teilnehmer und einer Basisstation bekannt.

Ein erstes Konzept verwendet dazu beispielsweise bei der Basisstation zum Empfang von Teilnehmersignalen in einer Uplink-Verbindung eine Phased-Array-Antennenanordnung als Antennenanordnung, wobei die Antennenanordnung mehrere Einzelantennen und mehrere Strahlungsdiagramme aufweist. Jedes einzelne der Strahlungsdiagramme ist dabei fest auf einen räumlichen Bereich für dessen Versorgung ausgerichtet. Ein von einem einzelnen Teilnehmer gesendetes Teilnehmersignal wird entsprechend der Anzahl der Einzelantennen über diese als Antennensignale empfangen, die mit Hilfe einer gemeinsamen Strahlformungseinheit als gewichtete Summensignale an Ausgänge der Strahlformungseinheit gelangen. Dabei ist jedem Ausgang der Strahlformungseinheit genau ein Strahlungsdiagramm zugeordnet.
Die gewichteten Summensignale gelangen an eine der Strahlformungseinheit nachgeschaltete, benutzerspezifische Strahlungsdiagramm-Auswahlschaltung zur weiteren Verarbeitung, deren Ausgangssignal wiederum neben dem Signal eines gewünschten Teilnehmers noch eine Untermenge an Signalen von weiteren Teilnehmern enthält, die räumlich dem gleichen Strahlungsdiagramm zugeordnet sind wie der gewünschte Teilnehmer.

Bei diesem ersten Konzept wird also für alle Teilnehmer, bzw. für deren Teilnehmersignale, an der Basisstation eine gemeinsame Strahlungsdiagrammformung durchgeführt. Die einzelnen Teilnehmersignale werden, abhängig von ihrem jeweiligen Standort, durch die Strahlungsdiagramme bzw. deren Strahlungsdiagrammcharakteristik im Empfangsfall quasi verstärkt oder gedämpft, wobei jedes einzelne Strahlungsdiagramm wiederum genau einem der Ausgänge der Strahlformungseinheit zugeordnet ist.

Durch die sehr robust durchführbare Realisierung dieses ersten Konzepts kann im Funkkommunikationssystem sowohl die Versorgung als auch die Systemkapazität verbessert werden. Weiter können störende Interferenzsignale von Teilnehmern unterdrückt werden, die sich im Vergleich zu einem ersten Teilnehmer in einem räumlichen Bereich befinden, der einem benachbarten Strahlungsdiagramm zugeordnet ist. Eine Unterdrückung von störenden Interferenzsignalen von Teilnehmern, die gemeinsam mit Hilfe des gleichen Strahlungsdiagramms versorgt werden, ist nicht möglich.
Durch eine Auswahl einer begrenzten Anzahl an vorgeformten Strahlungsdiagrammen wird die räumliche Auflösung reduziert.

Bei einem zweiten Konzept wird zum Empfang von Teilnehmersignalen an der Basisstation eine Antennenanordnung mit Einzelantennen verwendet. Jedoch erfolgt nun keine starre Zuordnung von festen Strahlungsdiagrammen bzw. räumlichen Bereichen zu den Teilnehmern mehr, sondern es werden die durch die Einzelantennen empfangenen Antennensignale direkt und benutzerspezifisch verarbeitet, die einzelnen Antennensignale also adaptiv miteinander kombiniert. Bei Funkkommunikationssystemen mit CDMA-Vielfachzugriffsverfahren geschieht dies beispielsweise mit Hilfe eines "Eigen-Beamformers".

Dieses zweite Konzept wird charakterisiert durch eine volle Anpassungsfähigkeit des Funkkommunikationssystems an die jeweilige Übertragungs- bzw. Interferenzsituation. Mit Hilfe von technisch ausgereiften Algorithmen und einer benutzerspezifischen, adaptiven Berechnung von beliebigen Strahlungsdiagrammen (Beams), ergeben sich gute Möglichkeiten zur Unterdrückung von störenden Interferenzsignalen. Eine Optimierung eines Empfangssignals bezüglich Rauschen und Interferenz ist dadurch möglich und erfolgt anhand eines "Signal-To -Interference and Noise-Ratio-Werts" (SINR).

Dies bedingt jedoch eine hohe Komplexität und erhöhten Rechenaufwand durch die benutzerspezifische Verarbeitung der Teilnehmersignale, beispielsweise durch den Eigen-Beamformer, was besonders bei einer Verarbeitung von Spread-Spectrum-Empfangssignalen der Fall ist.

Aus GB 2 335 572 A ist ein so genanntes "multiple beam antenna system" bekannt. Dabei gelangen Antennensignale mehrer Einzelantennen ATR₁ bis ATR_{N} an einen so genannten "reception beam former" RBF, der Antennensignale durch gewichtete Summationen jeweils einem von M so genannten "Beams" zuordnet und insgesamt M Signale B₁ bis B_{M} bildet. Die Signale B₁ bis B_{M} gelangen an einen dem "reception beam former" RBF nachgeschalteten "channel receiver" CHR zur weiteren Verarbeitung, wobei beispielsweise eine Entspreizung durchführt wird.

Aus "Smart Antennas", IEEE Antennas And Propagation Magazine, IEEE INC, New York, US, Bd. 42, Nr. 3, Juni 2000 (2000-06), Seiten 129-136, XP000936720, ISSN: 1045-9243, sind weitere so genannte "Smart Antenna - Beamforming Verfahren" bekannt. Dabei werden eine Anzahl an Antennensignale in einer Stufe gewichtet und summiert. Die einzelnen dort genannten Beamforming-Verfahren beschreiben die Berechnung der jeweils benötigten Gewichte.

Der Erfindung liegt die Aufgabe zugrunde, bei einer Verbindung innerhalb eines Funkkommunikationssystems den Empfang von Teilnehmersignalen bezüglich eines Signal-To-Interference and Noise-Ratio-Werts unter Einsatz einer benutzerspezifischen adaptiven Auswertung zu optimieren, bei einer gleichzeitigen Reduzierung der dadurch verursachten Komplexität.

Die Aufgabe der Erfindung wird durch die Merkmale des Anspruchs 1 gelöst. Vorteilhafte Weiterbildungen der Erfindung sind in den Unteransprüchen angegeben.

Durch die erfindungsgemäße Kombination des gemeinsamen Strahlformungsnetzwerks, mit dessen Hilfe eine Signalvorverarbeitung bzw. eine Strahlungsdiagrammvorauswahl stattfindet, einerseits und der benutzerspezifischen Strahlformungseinheit andererseits, wird eine Empfangssituation auf einen vorgegebenen SINR-Wert angepasst.

Durch die erfindungsgemäße Kombination wird, vergleichend mit der ausschließlichen benutzerspezifischen Verarbeitung der Antennen- bzw. Teilnehmersignale, bei einem im wesentlichen gleichbleibenden SINR-Wert eine Verringerung der Komplexität und eine Verringerung an Rechenleistung bei nur geringem Mehraufwand an Hard- und Software und eine Reduzierung von Datenraten erreicht.

Durch die mit Hilfe eines Selectors vorteilhaft erfolgende benutzerspezifische Auswahl einer Untermenge von Strahlungsdiagrammen und einer weiteren Verarbeitung mit Hilfe von beispielsweise einem Eigen-Beamformer, erfolgt eine Konzentration von Energie. Mit Hilfe des gemeinsamen Strahlformungsnetzwerks wird eine räumliche Vorverarbeitung realisiert. Mit Hilfe des Selectors werden diejenigen Eingangssignale der Strahlformungseinheit ausgewählt, die ein optimales Verhältnis vom jeweiligen Teilnehmernutzsignal zu störenden Interferenzsignalen und Rauschen bilden oder deren benutzerspezifische gewichtete Kombination ein optimales Verhältnis vom jeweiligen Teilnehmernutzsignal zu störenden Interferenzsignalen und Rauschen bilden.

Durch eine Benutzung des gemeinsamen Strahlformungsnetzwerks und optimierter benutzerspezifischer Algorithmen der Strahlformungseinheit erfolgt ein anpassungsfähiger Austausch zwischen der Komplexität einerseits und der Systemkapazität andererseits. Durch die erfindungsgemäße Kombination des ersten als auch des zweiten Konzepts erfolgt, verglichen mit den einzelnen Konzepten, der Austausch im wesentlichen ohne Beschränkungen bzw. Nachteile. Beispielsweise sind die Einzelantennen und die einzelnen Strahlungsdiagramme (transformed domain), von einem theoretischen Standpunkt aus betrachtet, einander gleichartig, falls alle Kb Ausgänge des gemeinsamen Strahlformungsnetzwerks durch den Selector zur Weiterverarbeitung in der benutzerspezifischen Strahlformungseinheit ausgewählt werden.

Der Vorteil der räumlichen Vorverarbeitung mit Hilfe des gemeinsamen Strahlformungsnetzwerks ist die Einrichtung von geeigneten Signalverhältnissen (Energiekonzentrationen), die es erlauben, die adaptiven, benutzerspezifischen Algorithmen einfacher zu gestalten bzw. deren Dimensionen zu reduzieren.

Im folgenden wird ein Ausführungsbeispiel der Erfindung anhand der Zeichnung näher erläutert. Dabei zeigt:
- FIG 1: ein Verfahren zur gemeinsamen Strahlungsdiagrammformung nach dem Stand der Technik,
- FIG 2: ein Verfahren zur benutzerspezifischen Strahlungsdiagrammformung nach dem Stand der Technik,
- FIG 3: ein Schaltbeispiel zur Realisierung des erfindungsgemäßen Verfahrens, und
- FIG 4: ein Schaltbeispiel zur Realisierung der benutzerspezifischen Strahlformungseinheit in einer Schaltung nach FIG 3.

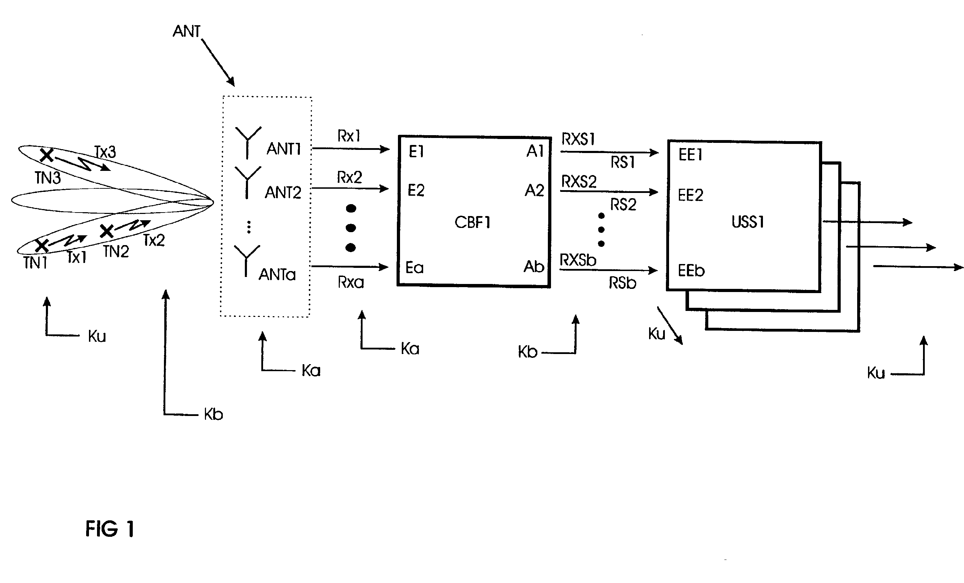

FIG 1 zeigt ein Verfahren zur gemeinsamen Strahlungsdiagrammformung nach dem Stand der Technik.

Ein von einem ersten Teilnehmer TN1 gesendetes Signal Tx1 wird mit Hilfe einer adaptiven Antennenanordnung ANT empfangen. Die Antennenanordnung ist beispielsweise als Phased-Array-Antennenanordnung ausgeführt und weist insgesamt Kb Strahlungsdiagramme auf, die zueinander horizontal versetzt angeordnet sind, wodurch jedes einzelne Strahlungsdiagramm jeweils einen räumlichen Bereich des Funkkommunikationssystems fest abdeckt.

Die Antennenanordnung ANT weist zur Erzeugung der Kb Strahlungsdiagramme insgesamt Ka Einzelantennen ANT1, ANT2, ..., ANTa auf, über die Teilnehmersignale von insgesamt Ku Teilnehmern empfangen werden. Die Einzelantennen ANT1 bis ANTa empfangen das vom ersten Teilnehmer TN1 gesendete Signal Tx1 als Ka Antennensignale Rx1, Rx2, ..., Rxa, die als Eingangssignale an ein gemeinsames Netzwerk zur Strahlungsdiagrammformung, dem Strahlformungsnetzwerk CBF1, gelangen, das daher Ka Eingänge E1, E2, ..., Ea zur Aufnahme der Ka Antennensignale Rx1 bis Rxa und insgesamt Kb Ausgänge A1, A2, ..., Ab aufweist. Dabei wird jedem einzelnen der Kb Ausgänge A1 bis Ab genau eines der Kb Strahlungsdiagramme fest zugeordnet.

Mit Hilfe des gemeinsamen Strahlformungsnetzwerks CBF1 werden die Ka Antennensignale Rx1, Rx2, ..., Rxa des ersten Teilnehmers TN1 zu Kb gewichteten Summensignalen RXS1, RXS2, ...,RXSb zusammengefasst, die an die einzelnen Kb Ausgänge Al bis Ab des gemeinsamen Strahlformungsnetzwerks CBF1 gelangen. Somit ist jedem einzelnen Summensignal RXS1 bis RXSb abhängig vom jeweiligen Ausgang Al bis Ab genau eines der Kb Strahlungsdiagramme zuordenbar. Abhängig von der Position des Teilnehmers TN1 im Funkkommunikationssystem sind seine Summensignale unterschiedlich stark und damit gewichtet.

Diese Zuordnung wird für alle Ku Teilnehmer gemeinsam durchgeführt, wobei die so gebildeten Summensignale RXS1 bis RXSb eines einzelnen Teilnehmers zusammen mit denen aller anderen Teilnehmer als Gesamtsignale RS1, RS2, ...,RSb über die jeweils zugeordneten Ausgänge A1, A2, ..., Ab des gemeinsamen Strahlformungsnetzwerks CBF1 als Eingangssignale an Kb Eingänge EE1, EE2, ..., Eeb einer benutzerspezifische Strahlungsdiagramm-Auswahlschaltung USS1 zur weiteren Verarbeitung gelangen. Mit deren Hilfe wird für jeden einzelnen Teilnehmer ein Ausgangssignal erzeugt, das neben dem Signal eines gewünschten Teilnehmers nur noch eine Untermenge an Signalen derjenigen Teilnehmer enthält, die räumlich demselben Strahlungsdiagramm zugeordnet sind. Beispielsweise enthält das Ausgangssignal für den gewünschten Teilnehmer TN1 noch Signalanteile eines Teilnehmers TN2.

Das gemeinsame Strahlformungsnetzwerk CBF1 kann dabei eine Butler-Matrix enthalten, wobei vorzugsweise eine NxN Butler-matrix mit der jeweils gleichen Anzahl an Eingängen und Ausgängen zur Anwendung kommt. Das jeweilige Summensignal wird hier trägerfrequent gebildet, anschließend ins Basisband umgesetzt und analog-digital gewandelt und ist hier nicht dargestellt, während eine benutzerspezifische Weiterverarbeitung dann im Basisband erfolgt. Sinngemäß ist dabei auch eine zuerst erfolgende Umsetzung der einzelnen Antennensignale ins Basisband und eine nachfolgend Summensignalbildung und benutzerspezifische Weiterverarbeitung möglich.

Das hier geschilderte Verfahren wird durch die geringe Komplexität des Funkkommunikationssystems charakterisiert, die durch das gemeinsames Strahlformungsnetzwerk CBF1 und der nachfolgenden benutzerspezifischen Auswahl von jedem einzelnen der Ku Teilnehmersignale erzielt wird.

Durch die Auswahl von in der Anzahl begrenzten, vorgeformten Strahlungsdiagrammen wird die räumliche Auflösung reduziert. Weiter können bei diesem Verfahren keine Interferenzsignale unterdrückt werden, die räumlich demselben Strahlungsdiagramm zugeordnet sind.

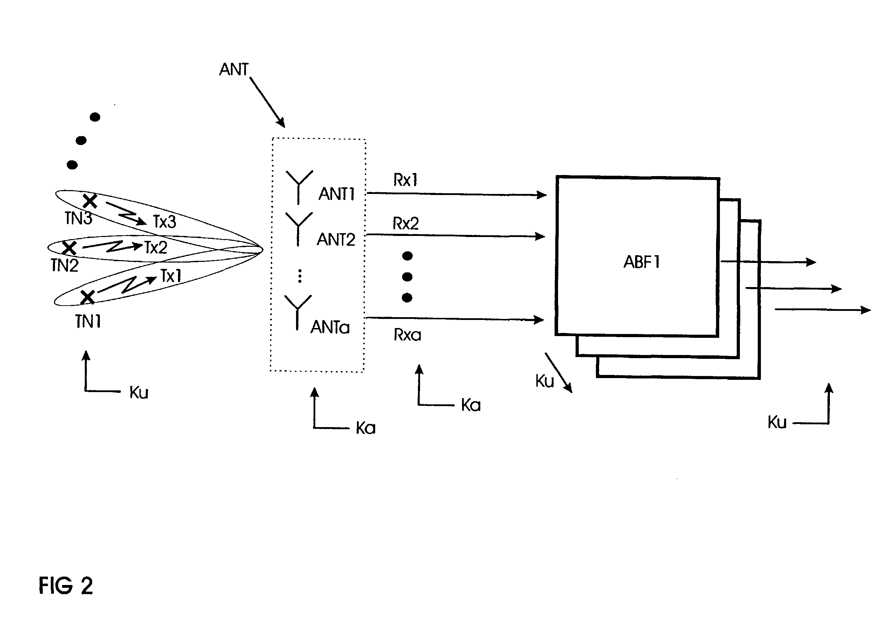

FIG 2 zeigt ein Verfahren zur benutzerspezifischen Strahlungsdiagrammformung nach dem Stand der Technik. Vergleichend mit FIG 1 gelangt ein mit Hilfe der Antennenanordnung ANT, bzw. ein durch die Ka Einzelantennen ANT1, ANT2, ..., ANTa empfangenes Teilnehmersignal eines Teilnehmers TN1 als Ka Antennensignale Rx1, Rx2, ..., Rxa an insgesamt Ka Eingänge einer benutzerspezifischen, adaptiven Strahlformungseinheit ABF1, mit deren Hilfe eine Berechnung von benutzerspezifischen Strahlungsdiagrammen erfolgt.

Die benutzerspezifische, adaptive Strahlformungseinheit ABF1 kann beispielsweise bei Funkkommunikationssystemen mit CDMA-Zugriffsverfahren mit Hilfe eines Eigen-Beamformers erfolgen.

Das hier geschilderte benutzerspezifische adaptive Verfahren wird charakterisiert durch die Möglichkeit, störende Interfernzsignale benutzerspezifisch gezielt auszublenden, durch eine volle Adaptivität der für jeden der Ku Teilnehmer jeweils berechneten Strahlungsdiagramme. Dies bedingt allerdings eine hohe Komplexität des Funkkommunikationssystems. Beispielsweise werden hier mit Hilfe der Strahlungsdiagramme störende Interferenzsignale TX2 und TX3 von Teilnehmern TN2 und TN3 gezielt von einem Nutzsignal TX1 eines Teilnehmers TN1 getrennt und ausgeblendet.

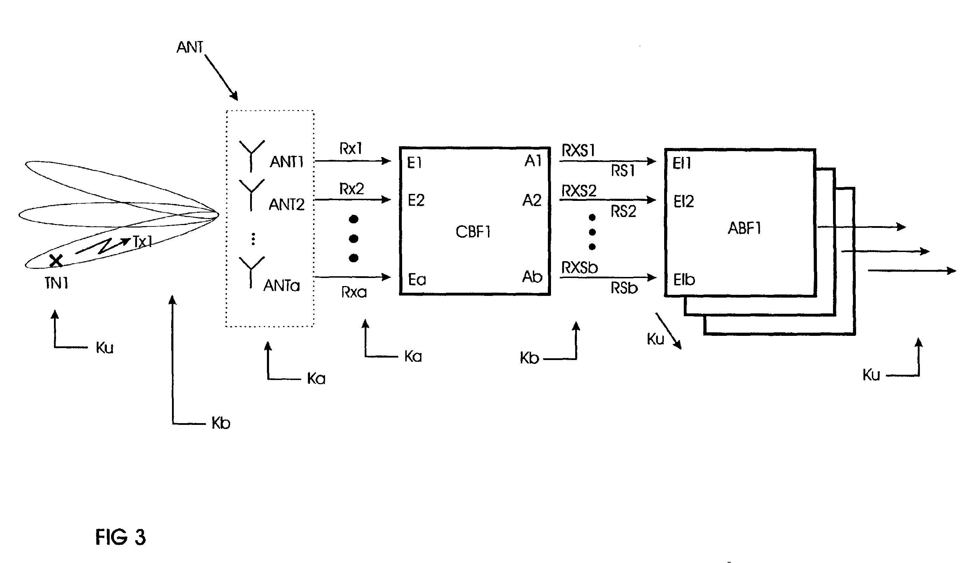

FIG 3 zeigt ein Schaltbeispiel zur Realisierung des erfindungsgemäßen Verfahrens. Vergleichend mit FIG 1 und FIG 2 wird die gemeinsame Strahlungsdiagrammformung mit der benutzerspezifischen Strahlungsdiagrammformung kombiniert.

Die mit Hilfe der Ka Einzelantennen ANT1 bis ANTa empfangenen Ka Antennensignale Rx1 bis Rxa eines Teilnehmers TN1, der ein Teilnehmersignal TX1 gesendet hat, gelangen als Ka Eingangssignale an ein gemeinsames Strahlformungsnetzwerk CBF1, das insgesamt Ka Eingänge E1, E2, ..., Ea zur Aufnahme der Ka Antennensignale Rx1 bis Rxa aufweist. Das gemeinsame Strahlformungsnetzwerk CBF1 bildet daraus Kb Summensignale RXS1, RXS2, ..., RXSb, die an insgesamt Kb Ausgänge A1, A2, ..., Ab des gemeinsamen Strahlformungsnetzwerks gelangen. Jedem einzelnen der Kb Ausgänge A1, A2, ..., Ab ist dabei jeweils eines von Kb Strahlungsdiagrammen fest zugeordnet.

Diese Zuordnung wird für alle Ku Teilnehmer gemeinsam durchgeführt, wobei die so gebildeten Summensignale RXS1 bis RXSb eines einzelnen Teilnehmers zusammen mit denen aller anderen Teilnehmer als Gesamtsignale RS1, RS2, ...,RSb über die jeweils zugeordneten Ausgänge A1, A2, ..., Ab des gemeinsamen Strahlformungsnetzwerks CBF1 als Eingangssignale an Kb Eingänge EI1, EI2, ..., Eib einer benutzerspezifischen Strahlformungseinheit ABF1 gelangen, mit deren Hilfe eine benutzerspezifischen Auswahl einer Untermenge von Strahlungsdiagrammen bzw. eine benutzerspezifische Verarbeitung dieser Untermenge erfolgt.

Erfindungsgemäß vereint diese Kombination die Vorteile der beiden in den FIG 1 und FIG 2 geschilderten Verfahren, im besonderen die volle Adaptivität und die Unterdrückung von störenden Interferenzsignalen, bei einer gleichzeitigen Reduzierung der Komplexität, die durch das gemeinsame Strahlformungsnetzwerk CBF1 in Kombination mit der benutzerspezifischen Auswahl erreicht wird.

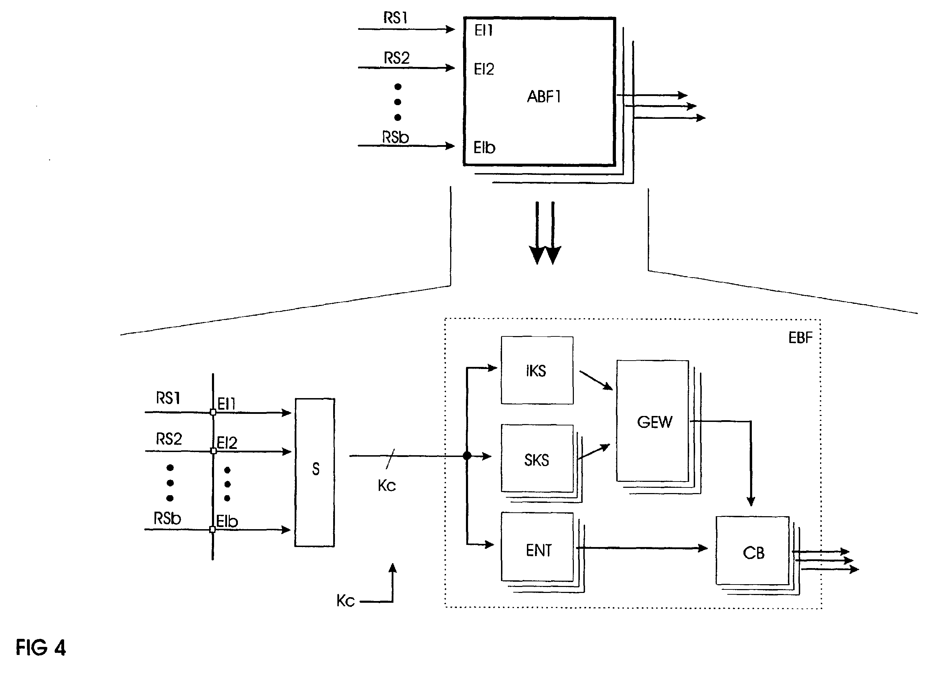

FIG 4 zeigt ein Schaltbeispiel zur Realisierung der benutzerspezifischen Strahlformungseinheit ABF1 in einer Schaltung nach FIG 3.
Dabei wird beispielhaft ein Funkkommunikationssystem mit CDMA-Zugriffsverfahren vorausgesetzt.

Die Gesamtsignale RS1, RS2, ...,RSb aller Ku Teilnehmer gelangen als Eingangssignale an die Kb Eingänge EI1, EI2, ..., Eib der benutzerspezifischen Strahlformungseinheit ABF1, die einen Eigen-Beamformer EBF und einen Selector S aufweist. Mit Hilfe des Selectors S erfolgt eine benutzerspezifische Auswahl einer Teilmenge Kc aus den Kb Gesamtsignalen der insgesamt Ku Teilnehmer. Diese ausgewählte Teilmenge Kc wird dem Eigen-Beamformer EBF als Eingangssignale zugeführt.

Der Eigen-Beamformer EBF bildet aus den Signalen der Teilmenge Kc mit Hilfe einer dort angeordneten Interferenz-Kovarianz-Schätzeinrichtung IKS eine Interferenz-Kovarianz-Matrix und mit Hilfe einer ebenfalls dort angeordneten Signal-Kovarianz-Schätzeinrichtung SKS eine Signal-Kovarianzmatrix aus den jeweils zugeführten Signalen der Teilmenge Kc.

Mit Hilfe der Signal-Kovarianz-Matrix und der Interferenz-Kovarianz-Matrix werden durch eine Gewichtungseinrichtung GEW über ein Eigenwertzerlegungen jeweils adaptiv und benutzerspezifisch Gewichte berechnet, die an einen Combiner CB gelangen.

Die Signale der Teilmenge Kc gelangen als Ausgangssignale des Selectors an eine Entspreizeinrichtung ENT, mit deren Hilfe sie als entspreizte Eingangssignale ebenfalls an den Combiner CB gelangen. Mit Hilfe des Combiners werden die Kc Ausgangssignale des Selectors gewichtet und aufaddiert. Diese benutzerspezifischen Summensignale werden weiterverarbeitet.

Zusammengefasst werden also mit Hilfe des gemeinsamen Strahlformungsnetzwerks CBF1 den Antennensignalen Strahlungsdiagramme zugeordnet. Ein auswählender Selector S wählt aus den Gesamtsignalen RS1 bis RSb benutzerspezifisch eine Teilmenge Kc aus, die kleiner gleich der Anzahl der Strahlungsdiagramme Kb der Antennenanordnung ist. Dies erfolgt für jeden einzelnen der insgesamt Ku Teilnehmer. An den Signalen der Teilmenge Kc wird mit Hilfe der Strahlformungseinheit ABF1 ein Eigenstrahlungsdiagramm-Formungsalgorithmus durchgeführt.

Sowohl Entspreizung, Schätzung der Kovarianzmatrix als auch Eigenwertzerlegung wird durch die Vorauswahl von Strahlungsdiagrammen mit Hilfe des gemeinsamen Strahlformungsnetzwerks CBF1 vereinfacht, die Komplexität wird insgesamt reduziert.

Mit Hilfe des Selectors S ist dabei erfindungsgemäß ein fließender Übergang zwischen einer reinen gemeinsamen Strahlungsdiagrammformung und einer reinen benutzerspezifischen Strahlungsdiagrammformung möglich. Dieser Übergang wird eingestellt durch die jeweils aus den Gesamtsignalen ausgewählte Teilmenge Kc. Wird Kc mit dem Wert 1 belegt, so wird einer der Kb Eingänge EI1 bis Eib betrachtet, was einer gemeinsamen Strahlungsdiagrammformung entspricht. Wird als Teilmenge Kc mit Kb belegt, so entspricht dies einer rein benutzerspezifischen Strahlungsdiagrammformung.

## Patentansprüche

1. Verfahren zur Strahlungsdiagrammformung in einem Funkkommunikationssystem mit Vielfachzugriffsverfahren und mit Ku Teilnehmern,
- bei dem ein von einem einzelnen Teilnehmer (TN1) gesendetes Teilnehmersignal (Tx1) über eine Antennenanordnung (ANT), die Kb Strahlungsdiagramme aufweist, mittels dort angeordneter Ka Einzelantennen (ANT1, ..., ANTa) als Ka Antennensignale (Rx1, ..., Rxa) empfangen wird,
- bei dem die Ka Antennensignale (Rxa, ..., Rxa) als Eingangssignale an ein gemeinsames Strahlformungsnetzwerk (CBF1) mit Ka Eingängen (E1, ..., Ea) und Kb Ausgängen (A1, ... , Ab) gelangen,
- bei dem mit Hilfe des gemeinsamen Strahlformungsnetzwerks (CBF1) aus den Ka Antennensignalen (Rx1, ..., Rxa) jedes einzelnen der Ku Teilnehmer (TN1) insgesamt Kb gewichtete Summensignale (RXS1, ..., RXSb) gebildet werden, die als Ausgangssignale an die Kb Ausgänge (A1, ..., Ab) des gemeinsamen Strahlformungsnetzwerks (CBF1) gelangen,
- bei dem jedem einzelnen der Kb Ausgänge (A1, ..., Ab) des Strahlformungsnetzwerks (CBF1) genau eines der Kb Strahlungsdiagramme der Antennenanordnung (ANT) zugewiesen wird,
- bei dem die Ausgangssignale (RXS1, ..., RXSb) aller Ku Teilnehmer (TN1) des gemeinsamen Strahlformungsnetzwerks (CBF1) als Eingangssignale (RS1, ..., RSb) an eine adaptive, benutzerspezifische Strahlformungseinheit (ABF1) mit Kb Eingängen (EI1, ..., EIb) gelangen, und
- bei dem mit Hilfe der benutzerspezifischen Strahlformungseinheit (ABF1) eine benutzerspezifische Strahlungsdiagrammauswahl für jeden einzelnen der insgesamt Ku Teilnehmer (TN1) aus den Eingangssignalen (RS1, ..., RSb) der Strahlformungseinheit (ABF1) erfolgt.

2. Verfahren nach Anspruch 1, bei dem mit Hilfe des gemeinsamen Strahlformungsnetzwerks (CBF1) die Ka Antennensignale (Rx1, ..., Rxa) jedes einzelnen Teilnehmers (TN1) ins Basisband umgesetzt und analog/digital gewandelt werden und diese derart zu Kb gewichteten Summensignalen (RXS1, ..., RXSb) zusammengefasst werden, dass das jeweils zugeordnete Strahlungsdiagramm einen festgelegten räumlichen Bereich abdeckt.

3. Verfahren nach Anspruch 1, bei dem mit Hilfe des gemeinsamen Strahlformungsnetzwerks (CBF1) die Ka Antennensignale (Rx1, ..., Rxa) jedes einzelnen Teilnehmers (TN1) trägerfrequent derart zu Kb Summensignalen (RXS1, ..., RXSb) zusammengefasst werden, dass das jeweils zugeordnete Strahlungsdiagramm einen festgelegten räumlichen Bereich abdeckt, und das Summensignal (RXS1, ..., RXSb) nachfolgend ins Basisband umgesetzt und analog/digital gewandelt wird.

4. Verfahren nach Anspruch 3, bei dem die Zusammenfassung der Ka Antennensignale (Rx1, ..., Rxa) zu Kb Summensignalen (RXS1, ..., RXSb) mit Hilfe einer Butler-Matrix erfolgt.

5. Verfahren nach einem der vorhergehenden Ansprüche, bei dem mit Hilfe eines bei der benutzerspezifischen Strahlformungseinheit (ABF1) angeordneten Selectors (S) benutzerspezifisch eine Teilmenge Kc aus den Eingangssignalen (RS1, ..., RSb) der benutzerspezifischen Strahlformungseinheit (ABF1) ausgewählt wird, an denen eine benutzerspezifische Strahlungsdiagrammformung (EBF) erfolgt.

6. Verfahren nach Anspruch 5, bei dem die ausgewählten Signale der Teilmenge Kc als Eingangssignale an einen Eigen-Beamformer (EBF) gelangen.

7. Verfahren nach Anspruch 5 oder 6, bei dem zur benutzerspezifischen Auswahl der Signale der Teilmenge Kc mit Hilfe des Selectors (S) diejenigen Eingangssignale (RS1, ..., RSb) der Strahlformungseinheit (ABF1) ausgewählt werden, die ein optimales Verhältnis vom jeweiligen Teilnehmernutzsignal zu störenden Interferenzsignalen und Rauschen bilden oder deren benutzerspezifische gewichtete Kombination ein optimales Verhältnis vom jeweiligen Teilnehmernutzsignal zu störenden Interferenzsignalen und Rauschen bilden.

8. Verfahren nach Anspruch 6 oder 7, bei dem die Eingangssignale des Eigen-Beamformers (EBF)
- zur Bildung einer Interferenz-Kovarianz-Matrix mit Hilfe einer Interferenz-Kovarianz-Schätzeinrichtung (IKS) und
- zur Bildung einer Signal-Kovarianz-Matrix mit Hilfe einer Signal-Kovarianz-Schätzeinrichtung (SKS) dienen, und
- zur Bildung von entspreizten Ausgangssignalen an eine Entspreizeinrichtung (ENT) gelangen.

9. Verfahren nach Anspruch 8, bei dem mit Hilfe einer Gewichtungseinrichtung (GEW) mittels der Interferenz-Kovarianz-Matrix und der Signal-Kovarianz-Matrix über Eigenwertzerlegungen jeweils Gewichte der einzelnen Strahlungsdiagramme berechnet werden und diese gemeinsam mit den entspreizten Ausgangssignalen an einen Combiner (CB) gelangen.

10. Verfahren nach Anspruch 8 und 9, bei dem mit Hilfe des Combiners (CB) eine Eigen-Beamformung realisiert wird.

11. Verfahren nach einem der Ansprüche 5 bis 10, bei dem mit Hilfe des Selectors (S) ein fließender Übergang zwischen einer reinen gemeinsamen Strahlungsdiagrammformung und einer reinen benutzerspezifischen Strahlungsdiagrammformung realisiert wird, wobei dies mit Hilfe der ausgewählten Teilmenge Kc erfolgt.

## Claims

1. Method for polar diagram forming in a radio communications system using multiple access methods and with Ku subscribers,
- in which a subscriber signal (Tx1) which is sent by an individual subscriber (TN1) is received via an antenna arrangement (ANT), which has Kb polar diagrams, by means of Ka individual antennas (ANT1, ..., ANTa), which are arranged there, as Ka antenna signals (Rx1, ..., Rxa),
- in which the Ka antenna signals (Rxa, ..., Rxa) are passed as input signals to a common beamforming network (CBF1) with Ka inputs (E1, ..., Ea) and Kb outputs (A1, ..., Ab),
- in which a total of Kb weighted sum signals (RXS1, ..., RXSb) are formed with the aid of the common beamforming network (CBF1) from the Ka antenna signals Rx1, ..., Rxa) for each individual one of the Ku subscribers (TN1), and these sum signals (RXS1, ..., RXSb) are passed as output signals to the Kb outputs (A1, ..., Ab) of the common beamforming network (CBF1),
- in which each individual one of the Kb outputs (A1, ..., Ab) of the beamforming network (CBF1) is assigned one, and only one, of the Kb polar diagrams of the antenna arrangement (ANT),
- in which the output signals (RXS1, ..., RXSb) from all Ku subscribers (TN1) from the common beamforming network (CBF1) are passed as input signals (RS1, ..., RSb) to an adaptive user-specific beamforming unit (ABF1) with Kb inputs (EI1, ..., EIb), and
- in which the user-specific beamforming unit (ABF1) is used to make a user-specific polar diagram selection for each individual one of the total of Ku subscribers (TN1) from the input signals (RS1, ..., RSb) to the beamforming unit (ABF1).

2. Method according to Claim 1, in which the common beamforming network (CBF1) is used to convert the Ka antenna signals (Rx1, ..., Rxa) for each individual subscriber (TN1) to baseband and to convert them from analogue to digital form, and these are combined to form Kb weighted sum signals (RXS1, ..., RXSb) such that the respectively associated polar diagram covers a defined three-dimensional area.

3. Method according to Claim 1, in which the common beamforming network (CBF1) is used to combine the Ka antenna signals (Rx1, ..., Rxa) for each individual subscriber (TN1) on a carrier-frequency basis to form Kb sum signals (RXS1, ..., RXSb), such that the respectively associated polar diagram covers a defined three-dimensional area, and the sum signal (RXS1, ..., RXSb) is then converted to baseband, and is converted from analogue to digital form.

4. Method according to Claim 3, in which the Ka antenna signals (RX1, ..., RXa) are combined to form Kb sum signals (RXS1, ..., RXSb) by means of a Butler matrix.

5. Method according to one of the preceding claims, in which a selector (S), which is arranged in the user-specific beamforming unit (ABF1), is used to select, on a user-specific basis, a subset Kc from the input signals (RS1, ..., RSb) to the user-specific beamforming unit (ABF1), on which user-specific polar diagram forming (EBF) is carried out.

6. Method according to Claim 5, in which the selected signals in the subset Kc are passed as input signals to an eigen beamformer (EBF).

7. Method according to Claim 5 or 6, in which, for user-specific selection of the signals in the subset Kc, the selector (S) is used to select those input signals (RS1, ..., RSb) to the beamforming unit (ABF1) which form an optimum ratio between the respective subscriber useful signal and the disturbing interference signals and noise, or whose user-specific weighted combination forms an optimum ratio between the respective subscriber useful signal and the disturbing interference signals and noise.

8. Method according to Claim 6 or 7, in which the input signals for the eigen beamformer (EBF)
- are used to form an interference covariance matrix with the aid of an interference covariance estimation device (IKS), and
- are used to form a signal covariance matrix with the aid of a signal covariance estimation device (SKS), and
- are passed to a despreading device (ENT) in order to form despread output signals.

9. Method according to Claim 8, in which weights are in each case calculated from the individual polar diagrams with the aid of a weighting device (GEW) and by means of the interference covariance matrix and the signal covariance matrix, using eigen value decompositions, and these weights are passed together with the despread output signals to a combiner (CB).

10. Method according to Claims 8 and 9, in which eigen beamforming is carried out with the aid of the combiner (CB).

11. Method according to one of Claims 5 to 10, in which the selector (S) provides a smooth transition between pure common polar diagram forming and pure user-specific polar diagram forming, with this process being carried out with the aid of the selected subset Kc.

## Revendications

1. Procédé pour la formation de diagramme de rayonnement dans un système de radiocommunication avec procédé d'accès multiple et avec Ku abonnés,
- dans lequel un signal d'abonné (TX1) envoyé par un abonné (TN1) individuel est reçu par un agencement d'antennes (ANT), qui présente Kb diagrammes de rayonnement, au moyen de Ka antennes individuelles (ANT1, ..., ANTa) y disposées, sous la forme de Ka signaux d'antenne (Rx1, ..., Rxa),
- dans lequel les Ka signaux d'antenne (Rx1, ..., Rxa) parviennent sous la forme de signaux d'entrée à un réseau commun de formation de faisceau (CBF1) avec Ka entrées (E1, ..., Ea) et Kb sorties (A1, ..., Ab),
- dans lequel, à l'aide du réseau commun de formation de faisceau (CBF1), on forme à partir des Ka signaux d'antenne (Rx1, ..., Rxa) de chaque abonné individuel (TN1) des Ku abonnés au total Kb signaux somme pondérés (RXS1, ..., RXSb), qui parviennent sous la forme de signaux de sortie aux Kb sorties (A1, ..., Ab) du réseau commun de formation de faisceau (CBF1)
- dans lequel, à chaque sortie individuelle des Kb sorties (A1, ..., Ab) du réseau de formation de faisceau (CBF1), est attribué exactement un des Kb diagrammes de rayonnement de l'agencement d'antennes (ANT),
- dans lequel les signaux de sortie (RXS1, ..., RXSb) de tous les abonnés Ku (TN1) du réseau commun de formation de faisceau (CBF1) parviennent sous la forme de signaux d'entrée (RS1, ..., RSb) à une unité de formation de faisceau (ABF1) adaptative et spécifique à l'utilisateur avec Kb entrées (EI1, ..., EIb), et
- dans lequel, à l'aide de l'unité de formation de faisceaux (ABF1) spécifique à l'utilisateur, on effectue un choix de diagramme de rayonnement spécifique à l'utilisateur pour chaque abonné individuel (TN1) des au total Ku abonnés à partir des signaux d'entrée (RS1, ..., RSb) de l'unité de formation de faisceau (ABF1).

2. Procédé selon la revendication 1, dans lequel, à l'aide du réseau commun de formation de faisceau (CBF1), les Ka signaux d'antenne (Rx1, ..., Rxa) de chaque abonné individuel (TN1) sont transformés en bande de base et font l'objet d'une conversion analogique/numérique et ceux-ci sont regroupés en Kb signaux somme (RXS1, ..., RXSb) pondérés de telle sorte que le diagramme de rayonnement respectivement attribué couvre une zone définie dans l'espace.

3. Procédé selon la revendication 1, dans lequel, à l'aide du réseau commun de formation de faisceau (CBF1), les Ka signaux d'antenne (Rx1, ..., Rxa) de chaque abonné individuel (TN1) sont regroupés avec une fréquence porteuse en Kb signaux somme (RXS1, ..., RXSb) de telle sorte que le diagramme de rayonnement respectivement attribué couvre une zone définie dans l'espace, et le signal somme (RXS1, ..., RXSb) est ensuite transformé en bande de base et fait l'objet d'une conversion analogique/numérique.

4. Procédé selon la revendication 3, dans lequel le regroupement des Ka signaux d'antenne (Rx1, ..., Rxa) en Kb signaux somme (RXS1, ..., RXSb) s'effectue à l'aide d'une matrice de Butler.

5. Procédé selon l'une quelconque des revendications précédentes, dans lequel, à l'aide d'un sélecteur (S) disposé sur l'unité de formation de faisceau (ABF1) spécifique à l'utilisateur, on sélectionne de façon spécifique à l'utilisateur un sous-ensemble Kc des signaux d'entrée (RS1, ..., RSb) de l'unité de formation de faisceau (ABF1) spécifique à l'utilisateur, sur lesquels on effectue une formation de diagramme de rayonnement (EBF) spécifique à l'utilisateur.

6. Procédé selon la revendication 5, dans lequel les signaux sélectionnés du sous-ensemble Kc parviennent sous la forme de signaux d'entrée sur un formateur de faisceau propre (EBF).

7. Procédé selon la revendication 5 ou 6, dans lequel, pour la sélection spécifique à l'utilisateur des signaux du sous-ensemble Kc, on sélectionne à l'aide du sélecteur (S) les signaux d'entrée (RS1, ..., RSb) de l'unité de formation de faisceau (ABF1), qui forment un rapport optimal entre le signal utile d'abonné respectif et les signaux d'interférence gênants et le bruit ou dont la combinaison pondérée spécifique à l'utilisateur forme un rapport optimal entre le signal utile d'abonné respectif et les signaux d'interférence gênants et le bruit.

8. Procédé selon la revendication 6 ou 7, dans lequel les signaux d'entrée du formateur de faisceau propre (EBF)
- servent à la formation d'une matrice de covariance d'interférence à l'aide d'un dispositif d'estimation et de covariance d'interférence (IKS) et
- servent à la formation d'une matrice de covariance de signal à l'aide d'un dispositif d'estimation de covariance de signal (SKS), et
- parviennent à un dispositif de désétalement (ENT) pour la formation de signaux de sortie désétalés.

9. Procédé selon la revendication 8, dans lequel, à l'aide d'un dispositif de pondération (GEW), on calcule respectivement des poids des diagrammes de rayonnement individuels au moyen de la matrice de covariance d'interférence et de la matrice de covariance de signal par le biais de décompositions de valeur propre et ceux-ci parviennent conjointement avec les signaux de sortie désétalés à un combinateur (CB).

10. Procédé selon les revendications 8 et 9, dans lequel une formation de faisceau propre est réalisée à l'aide du combinateur (CB).

11. Procédé selon l'une quelconque des revendications 5 à 10, dans lequel, à l'aide du sélecteur (S), on réalise une transition insensible entre une formation de diagramme de rayonnement purement commune et une formation de diagramme de rayonnement purement spécifique à l'utilisateur, ceci s'effectuant à l'aide du sous-ensemble Kc sélectionné.
